(19) Europäisches Patentamt
European Patent Office
Office européen des brevets

(11) EP 2 226 875 A1

(12) EUROPEAN PATENT APPLICATION
published in accordance with Art. 153(4) EPC

(43) Date of publication:
08.09.2010 Bulletin 2010/36

(21) Application number: 08864562.7

(22) Date of filing: 24.12.2008

(51) Int Cl.:
*H01M 8/02* (2006.01) *C08F 12/26* (2006.01)
*C08J 5/22* (2006.01) *H01B 1/06* (2006.01)
*H01B 13/00* (2006.01) *H01M 8/10* (2006.01)

(86) International application number:
PCT/JP2008/073408

(87) International publication number:
WO 2009/081931 (02.07.2009 Gazette 2009/27)

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 25.12.2007 JP 2007332793

(71) Applicant: Tokuyama Corporation
Shunan-shi
Yamaguchi 745-8648 (JP)

(72) Inventors:
- ISOMURA, Takenori
Shunan-shi
Yamaguchi 745-8648 (JP)
- FUKUTA, Kenji
Shunan-shi
Yamaguchi 745-8648 (JP)
- YANAGI, Hiroyuki
Shunan-shi
Yamaguchi 745-8648 (JP)

(74) Representative: Duckworth, Timothy John et al
J.A. Kemp & Co.
14 South Square
Gray's Inn
London WC1R 5JJ (GB)

# (54) DIAPHRAGM FOR DIRECT LIQUID FUEL CELL AND METHOD FOR PRODUCING THE SAME

(57) Disclosed is a separation membrane for direct liquid fuel cells, which is composed of a quaternary ammonium-type anion exchange membrane. The quaternary ammonium-type anion exchange membrane is produced as follows: a polymerizable composition containing a styrene having a haloalkyl group, a crosslinking polymerizable monomer, a compound having an epoxy group and an effective amount of a polymerization initiator is brought into contact with a porous film, so that the pores of the porous film are filled with the polymerizable composition that is then polymerized therein; then a quaternary ammonium group is introduced into the bromoalkyl group; and then the counter ion of the quaternary ammonium group is ion-exchanged into a hydroxide ion. Also disclosed is a method for producing the quaternary ammonium-type anion exchange membrane.

EP 2 226 875 A1

## Description

TECHNICAL FIELD

The present invention relates to a separation membrane for a direct liquid fuel type fuel cell and production method thereof, specifically a separation membrane for a direct liquid fuel type fuel cell comprising anion-exchange membrane and production method thereof.

DESCRIPTION OF THE RELATED ART

A solid polymer type fuel cell uses solid polymer such as ion-exchange resin as an electrolyte, and is characterized by relatively low operating temperature. The solid polymer type fuel cell has, as shown in FIG. 1, a basic structure wherein a space surrounded by cell bulkhead 1 having a fuel flow hole 2 and oxidizing gas flow hole 3, respectively communicated with outside, is divided by a membrane assembly in which a fuel chamber side diffusion electrode 4 and an oxidizing agent chamber side gas diffusion electrode 5 are bonded to both surfaces of a solid polymer electrolyte membrane 6 respectively, to form a fuel chamber 7 communicated with outside via the fuel flow hole 2 and an oxidizing agent chamber 8 communicated with outside via the oxidizing gas flow hole 3. Then, in the solid polymer type fuel cell having the above basic structure, a fuel such as hydrogen gas or methanol, etc. is supplied into said fuel chamber 7 via the fuel flow hole 2, and oxygen or oxygen containing gas such as air to act as an oxidizing agent is supplied into the oxidizing agent chamber 8 via the oxidizing gas flow hole 3. Further, an external load circuit is connected between both diffusion electrodes to generate electric energy by the following mechanism.

When using a cation-exchange type electrolyte membrane as the solid electrolyte membrane 6, a proton (hydrogen ion) generated by contacting a fuel with a catalyst included in the electrode in the fuel chamber side diffusion electrode 4 conducts in the solid polymer electrolyte membrane 6 and moves into the oxidizing agent chamber 8 to generate water by reacting with oxygen in the oxidizing agent gas in the oxidizing agent chamber side gas diffusion electrode 5. On the other hand, an electron, generated in the fuel chamber side diffusion electrode 4 simultaneously with the proton, moves to the oxidizing agent chamber side gas diffusion electrode 5 through the external load circuit, so that it is possible to use the energy from the above reaction as an electric energy.

In a solid polymer type fuel cell wherein a cation-exchange type electrolyte membrane is used for such a solid electrolyte membrane, a perfluorocarbon sulfonic acid resin membrane is most commonly used as the cation-exchange type electrolyte membrane. However, the following problems are identified in the cation-exchange type fuel cell using the perfluorocarbon sulfonic acid resin membrane.

(i) Only a noble metal catalyst is usable due to the strongly acidic reaction field, and the perfluorocarbon sulfonic acid resin membrane is also expensive, so that there are limitations in cost reduction.

(ii) It requires replenishing water due to insufficient water retaining capacity.

(iii) It is difficult to reduce electric resistance by decreasing a thickness of the membrane due to low physical strength.

(iv) When using liquid fuel, such as methanol, as a fuel, because of high permeability of liquid fuel, liquid fuel arriving at an oxidizing agent chamber side gas diffusion electrode reacts with oxygen or air on the surface thereof, causing increase in overvoltage and reduction of output voltage.

To solve the above-mentioned problems, especially the above problem (i), it has been examined to use hydrocarbon-based anion-exchange membrane instead of perfluorocarbon sulfonic acid resin membrane, and several of such solid polymer type fuel cells have been already proposed (Patent Articles 1 to 3). In this case, a mechanism for generating electric energy in the solid polymer type fuel cell is different in ion species moving in the solid polymer electrolyte membrane 6 as below. Namely, liquid fuel such as hydrogen and methanol is supplied into the fuel chamber side, and oxygen and water are supplied into the oxidizing agent chamber side, so that the catalyst included in the electrode is contacted with the oxygen and water in the oxidizing agent chamber side gas diffusion electrode 5 to generate hydroxide ion. The hydroxide ion conducts in the solid polymer electrolyte membrane 6 formed by the above hydrocarbon-based anion-exchange membrane to move into the fuel chamber 7, and reacts with the fuel in the fuel chamber side diffusion electrode 4 to generate water. An electron generated as a result of the reaction in the fuel chamber side diffusion electrode 4 moves into the oxidizing agent chamber side gas diffusion electrode 5 through the external load circuit, so that the reaction energy is used as an electric energy.

Thus, when using the above-mentioned hydrocarbon-based anion-exchangemembrane, the obtained direct liquid fuel type fuel cell can normally be greatly improved in the problems (ii) to (iii) as well as the above problem (i), and it is further expected that the problem (iv) may be greatly reduced since a hydroxide ion having a large diameter moves from the oxidizing agent chamber side to the fuel chamber side when applying current.

In the separation membrane for a direct liquid fuel type fuel cell comprising the hydrocarbon-based anion-exchange membrane having such advantages, it is very favorable to use a quaternary ammonium group (the above Patent Articles 1 to 3) as an anion-exchange group used for the anion-exchange membrane because of the excellent ion conductivity and ease of obtaining materials for producing the anion-exchange membrane. Here, an anion-exchange membrane having such a quaternary ammonium group as an anion-exchange group is commonly produced by normally bringing a polymerizable composition comprising a polymerizable monomer having a halogenoalkyl group, such as chloromethylstyrene, and a crosslinkable polymerizable monomer into contact with a porous film to fill the polymerizable composition into void portion of the porous film, followed by polymerizing to set to obtain a cross-linked hydrocarbon-based resin having a halogenoalkyl group, and then introducing a quaternary ammonium group into the above halogenoalkyl group, followed by ion exchange of the counterion of the quaternary ammonium group into a hydroxide ion. For the above-mentioned polymerizable monomer having a halogenoalkyl group, chloromethylstyrene is mostly used due to its ease of obtaining, etc.

To attain high electrogenic capability in a direct liquid fuel type fuel cell, high heat resistance is required in addition to high electric conductivity of its separation membrane and low permeability of fuel (the above-mentioned problem (iv)). Higher operating temperature of a fuel cell causes higher activity in an electrode catalyst used for the fuel cell, and higher heat resistance of the separation membrane allows the fuel cell to operate at higher temperature, so that larger fuel cell output is obtainable. Therefore, high heat resistance is required for the separation membrane. However, when using a separation membrane for a direct liquid fuel type fuel cell wherein the above-mentioned chloromethylstyrene is used as a polymerizable monomer, its heat resistance is not sufficient. To improve the heat resistance, there may be mentioned an increase in degree of cross-linkage, etc., but it results in sharp increase in electric resistance of the separation membrane, and is impracticable.

Note that there is proposed a method to use bromoalkyl styrene, containing a bromoalkyl group with 2 or more carbon atoms, as a polymerizable monomer in the anion-exchange resin toward a request for improved heat resistance (e.g. Patent Articles 4 and 5). When using this method, a quaternary ammonium base is hardly removable since a long alkylene chain with 2 or more carbon atoms is introduced between the quaternary ammonium base and an aromatic ring in the bromoalkyl styrene while a quaternary ammonium base is easily removable since the quaternary ammonium base is bonded to an aromatic ring only via a short methylene group in the chloromethylstyrene. Also, it is possible to avoid to lower reactivity due to increased chain length since a highly reactive bromine group is introduced unlike the chloromethylstyrene, and a known method can be applied for introducing the quaternary ammonium base as in the case of using chloromethylstyrene. However, it is not disclosed in the prior arts using the long-chain bromoalkyl styrene that an anion-exchange membrane is produced by using the anion-exchange resin, and there is no mention of the usage of the resulting anion-exchange membrane.

[Patent Articles 1] Japanese Unexamined Patent Publication No. Hill-135137
[Patent Articles 2] Japanese Unexamined Patent Publication No. H11-273695
[Patent Articles 3] Japanese Unexamined Patent Publication No. 2000-331693
[Patent Articles 4] Japanese Unexamined Patent Publication No. H9-208625
[Patent Articles 5] Japanese Unexamined Patent Publication No. 2002-35607

DISCLOSURE OF INVENTION

PROBLEM TO BE SOLVED BY THE INVENTION

As mentioned before, it has been a big problem in a separation membrane for a direct liquid fuel type fuel cell using an anion-exchange membrane to improve heat resistance to obtain a high-power fuel cell, able to generate power at a high temperature.

Also, the present inventors studied from the thought that it might be effective for the above problems to use an anion-exchange membrane, produced by using the anion-exchange resin produced as above by using the long-chain bromoalkyl styrene, as a separation membrane for a fuel cell since removal of a quaternary ammonium group is restrained in the anion-exchange resin. When preparing an anion-exchange membrane having a porous film as its base material by using the above-described long-chain bromoalkyl styrene, a polymerizable composition comprising long-chain bromoalkyl styrene, crosslinkable polymerizable monomer and effective amount of polymerization initiator was contacted with the porous film to fill the polymerizable composition into void portion of the porous film, followed by polymerization, and then, a quaternary ammonium group was introduced into the above bromoalkyl group. The resulting anion-exchange membrane was useful enough to expect that properties required for said separation membrane for a fuel cell can be satisfied as for heat resistance while there remained room for further improvement for the separation membrane to use for a fuel cell in the following respect. Namely, this separation membrane was inferior in denseness, and permeability

of liquid fuel, i.e. the above-mentioned problem (iv), was not sufficiently reduced as expected, so that it was difficult to obtain acceptably high fuel cell output as a result. Therefore, to give the anion-exchange membrane sufficient impermeability of liquid fuel, film thickness should be considerably increased, or the degree of cross-linkage should be considerably increased. In these cases, it was unavoidable to greatly increase film resistance contrary to the above improved property, causing difficulty to obtain high fuel cell output.

The present inventors had found that such a phenomenon of reduced denseness of the membrane significantly occured in the conventional case of using an anion-exchange membrane, produced by polymerization of a polymerizable composition comprising chloromethylstyrene and crosslinkable polymerizable monomer, as a separation membrane for a direct liquid fuel type fuel cell (Patent Application No. 2007-272576). However, in the above case of using the bromoalkyl styrene instead of chloromethylstyrene, the reduction was further more drastic and severe.

Its cause is not fully understood, and it can be predicted to greatly reduce the denseness of the membrane because a part of the long-chain bromoalkyl group of the polymerizable monomer may be degraded due to heat of polymerization and generated radical at polymerization (the degradation may be more drastic than the degradation of chloromethyl group in chloromethylstyrene) to generate by-products such as bromine gas and hydrogen bromide gas which foam in the ion-exchange resin. Thus-foamed membrane shows significant asperity on its surface to hardly form an electrode thereon, and even when an electrode can be formed, the electrode may be peeled off by curling or getting wrinkles (to cause ' large deformation) of the membrane due to moistening by water since an amount of resin filled in a pore of the base material varies, so that it can no longer be used as a separation membrane for a fuel cell. '

Therefore, it is desirable to obtain said high fuel cell output that heat resistance of the above separation membrane for a direct liquid fuel type fuel cell is improved; that denseness of the membrane is also favorably maintained; that the permeability of liquid fuel is sufficiently lowered; and that film resistance is reduced. It has been further problem to achieve a good balance between these properties.

MEANS FOR SOLVING THE PROBLEM

The present inventors have been dedicated to study based on the above problems. As a result, the present invetors have succeeded in developing a quaternary ammonium type hydrocarbon-based anion-exchange membrane for said fuel cell able to favorably solve these problems, and come to propose the present invention.

Namely, the present invention includes the following features as its gist.

(1) A separation membrane for a direct liquid fuel type fuel cell, which is an anion-exchange membrane having a porous film as a base material whose void portion is filled with cross-linked anion-exchange resin, wherein:

said cross-linked anion-exchange resin has a main chain or a side chain bonded to a group containing an anion-exchange group shown in the following formula (1):

[Chemical Formula 1]

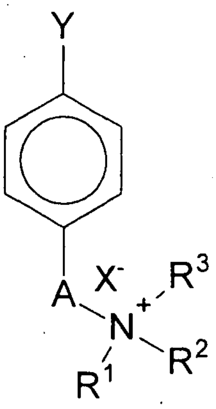

(1)

where "A" represents a linear, cyclic or branched alkylene group having 2 to 10 carbon atoms, or an alkoxy methylene group having 5 to 7 carbon atoms;
each of $R^1$, $R^2$ and $R^3$ represents a linear, cyclic or branched alkyl group having 1 to 8 carbon atoms and any two of $R^1$, $R^2$ and $R^3$ may mutually cooperate to form an aliphatic hydrocarbon ring;
"$X^-$" represents an anion selected from a group consisting of a hydroxide ion, carbonate ion and bicarbonate ion,
"Y"represents a bond to said anion-exchange resin.

(2) The separation membrane for a direct liquid fuel type fuel cell as set forth in (1), wherein said anion-exchange membrane has a uniformity index of 30% or less, the uniformity index being determined in the following procedure:

[1] said anion-exchange membrane is absolutely dried;
[2] a square sample of 5 cm×5 cm is cut out from a central region of the absolutely dried membrane, and its weight (W0) is measured;
[3] the square sample is further divided into small pieces of 5 mm×5 mm;
[4] each weight of the small pieces is measured to determine a maximum weight and a minimum weight to calculate a difference (W1) therebetween;
[5] a uniformity index of the membrane is determined as a ratio (percentage) of the difference (W1) between the maximum weight and the minimum weight per an average weight (W0/100) of small pieces, [W1/(W0/100)] ×100.

(3) The separation membrane for a direct liquid fuel type fuel cell as set forth in (1), wherein a film resistance measured by AC impedance method in wet condition at 40°C is 0.005 to 1.2 $\Omega\cdot cm^2$, and methanol permeability at 25°C is 30 to 800 $g\cdot m^{-2}\cdot hr^{-1}$

(4) The separation membrane for a direct liquid fuel type fuel cell as set forth in (1), wherein a film resistance measured by AC impedance method in wet condition at 40°C is 0.01 to 0.2 $\Omega$-$cm^2$, and methanol permeability at 25°C is 200 to 750 $g\cdot m^{-2}\cdot hr^{-1}$.

(5) A production method of a separation membrane for a direct liquid fuel type fuel cell comprising the steps of:

contacting a polymerizable composition, comprising a halogenated hydrocarbon group-containing styrene shown in the following formula (2), a crosslinkable polymerizable monomer, an acid trapping agent and an effective amount of a polymerization initiator, with a porous film;
filling the polymerizable composition into void portion of the porous film, followed by polymerization;

introducing a quaternary ammonium group to the above halogenated hydrocarbon group; and
ion-exchanging a counterion of the quaternary ammonium group into a hydroxide ion.

[Chemical Formula 2]

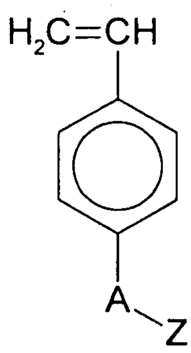

(2)

where "A" represents a linear, cyclic or branched alkylene group having 2 to 10 carbon atoms, or an alkoxy methylene group having 5 to 7 carbon atoms; and "Z" represents a halogen atom.

(6) The production method of a separation membrane for a direct liquid fuel type fuel cell as set forth in (5), wherein said acid trapping agent is a compound having an epoxy group.

(7) The production method of a separation membrane for a direct liquid fuel type fuel cell as set forth in (5) or (6), wherein said polymerization is performed at 80°C or less.

EFFECTS OF THE INVENTION

A separation membrane for a direct liquid fuel type fuel cell of the present invention is a quaternary ammonium type anion-exchange membrane having a quaternary ammonium group as an anion-exchange group, and shows high heat resistance. Therefore, it is possible to stably generate power even at a high temperature of 80°C or more, to improve activity of an electrode catalyst and to achieve higher fuel cell output than in the past.

Also, according to the present invention, it is possible to provide a quaternary ammonium type anion-exchange membrane, restrained in foaming therein at polymerization, dense, low in methanol permeability and small in film resistance by including an acid trapping agent in a polymerizable composition to be contacted with a porous film. Further, the above quaternary ammonium type anion-exchange membrane does not only have less surface asperity and more uniform thickness, but also the membrane is free from curling and getting wrinkles even when being moistened by water since all pores of its base material is packed with the anion-exchange resin. Thus, an electrode can easily be formed on this quaternary ammonium type anion-exchange membrane, and the formed electrode is hardly removable. Further, for a direct liquid fuel type fuel cell using this quaternary ammonium type anion-exchange membrane as its separation membrane, crossover of alcohol which is a fuel is restrained to a low value, and internal resistance of the cell is low, so that high fuel cell output can be obtained.

According to the separation membrane of the present invention giving high fuel cell output, for example, even with thin film thickness of 5 to 60 μm (further 7 to 30 um), practicable high output can be obtained, and the fuel cell can be downsized, so that it is extremely favorable for installing into portable devices for laminating a plurality of fuel cells and for other embodiments.

BRIEF DESCRIPTION OF THE DRAWINGS

FIG.1 is a conceptual diagram showing a basic structure of a solid polymer type fuel cell.
FIG.2 is a cross-sectional view of a cell for measuring methanol permeability.
FIG.3 is a plane view of a cell for measuring methanol permeability.

Each symbol in the drawings is as follows:

1: cell bulkhead;
2: fuel flow pore;
3: oxidizing agent gas flow pore;
4: fuel chamber side diffusion electrode;
5: oxidizing agent chamber side gas diffusion electrode;
6: solid polymer electrolyte (anion-exchange membrane);
7: fuel chamber;
8: oxidizing agent chamber;
9: separator;
10: gas passage;
10a: inlet port for flowing gas;
10b: outlet port for flowing gas;
11: liquid flow passage;
12: silicon rubber gasket; and
13: separation membrane.

BEST MODE FOR WORKING THE INVENTION

The anion-exchange membrane used in the separation membrane for a direct liquid fuel type fuel cell of the present invention has a porous film as a base material, whose void portion is filled with cross-linked anion-exchange resin, which has a polymerizable unit, having a group containing an anion-exchange group shown in the following formula (1) in its main chain or side chain, as a main polymerizable unit.

[Chemical Formula 3]

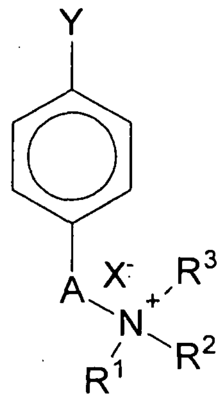

(1)

Note that "A" is a linear, cyclic or branched alkylene group having 2 to 10 carbon atoms, or an alkoxy methylene group having 5 to 7 carbon atoms, preferably a straight-chain alkylene group having 2 to 6 carbon atoms ($-(CH_2)_m-$, where "m" is integer number of 2 to 6); each of $R^1$, $R^2$ and $R^3$ is a linear, cyclic or branched alkyl group having 1 to 8 carbon atoms, and any two of $R^1$, $R^2$ and $R^3$ may mutually cooperate to form an aliphatic hydrocarbon ring, preferably respectively independently, an alkyl group having 1 to 3 carbon atoms; "$X^-$" is an anion selected from a group consisting of a hydroxide ion, carbonate ion and bicarbonate ion; and "Y" is a bond to said anion-exchange resin.

In this anion-exchange resin, there is present the alkylene group or alkoxy methylene group with a long chain length ("A" in the above formula) between a quaternary ammonium group and an aromatic ring, so that a bonding state of the quaternary ammonium group is more stable than that in an anion-exchange resin whose quaternary ammonium group is bonded to its aromatic ring via a short methylene group, and its heat resistance is much superior. Further, since this hydrocarbon-based anion-exchange resin is filled in the void portion of the porous film, i.e. base material, an influence by heat is softened, and the heat resistance is further improved. Thus, according to the separation membrane for a fuel cell of the present invention having the above constitution, it is possible to stably gerierate power even at high temperature of 80°C or more. On the other hand, as the chain length of the "A" is longer, ion exchange capacity per unit weight may be decreased and conductivity of the anion (X') may be reduced. Therefore, if taking both improvement effect of heat

resistance and reduced conductivity of the anion ($X^-$) due to reduced ion exchange capacity into consideration, "A" is preferably a straight-chain alkylene group having 2 to 6 carbon atoms ($-(CH_2)_m-$, where "m" is integer number of 2 to 6), further preferably a straight-chain alkylene group having 3 to 5 carbon atoms.

Also, the $R^1$, $R^2$ and $R^3$ constituting the quaternary ammonium group are excellent in conductivity of a hydroxide ion which becomes especially important when using this membrane as a separation membrane for a fuel cell, and it is easy to obtain monomers as its raw materials when producing the resin. Therefore, as the $R^1$ , $R^2$ and $R^3$ , an alkyl group having 1 to 3 carbon atoms is especially preferable among the above examples. As the alkyl group having 1 to 3 carbon atoms, specifically, methyl group, ethyl group, propyl group, isopropyl group, etc. may be mentioned, and among these, the methyl group is preferable since it can most significantly exert the above effect. These alkyl groups having 1 to 3 carbon atoms may be same or varied in $R^1$ , $R^2$, and $R^3$ to constitute a single quaternary ammonium group, and normally be same.

Also, the anion ($X^-$) is mainly a hydroxide ion immediately after ion exchange to a hydroxide ion type after quaternization, but it may gradually be exchanged into a carbonate ion and bicarbonate ion by carbon dioxide in the air. However, when starting operation of the fuel cell, the carbonate ion and bicarbonate ion are ion-exchanged to a hydroxide ion, so that there is no practical issue except for initial stage of the operation.

The porous film used in the present invention, if at least a part of fine pores of the porous film are communicated from one side to the other, is not particularlly limited, and normally, any known films having materials and forms, used as a base material for an ion exchange membrane, can be used without any limitation. Normally, because of high affinity to the hydrocarbon-based anion-exchange resin filled in the void portion, a hydrocarbon-based film can be used. In the context, being hydrocarbon-based indicates that a polymer substantially contains no carbon-fluorine bond, and that most bonds of the main chain and side chain of the polymer are constituted by a carbon-carbon bond, which is same as the definition of "being hydrocarbon-based" in the anion-exchange resin as will hereinafter be described in detail.

As specific examples of the porous film, there may be mentioned a polyolefin-based porous film produced by polyolefin-based resin such as a homopolymer or copolymer of $\alpha$-olefins including ethylene, propylene, 1-butene, 1-pentene, 1-hexene, 3-methyl-1-butene, 4-methyl-1-pentene and 5-methyl-1-heptene; and also, an engineering plastic-based porous film produced by engineering plastic resin such as polycarbonates, polyamides, polyallylates, polyimides, polyamide-imides, polyetherimides, polyethersulfones, polyetherketones, polyether ether ketones, polysulfones and polyphenylene sulfides. Among these, a polyethylene or polypropylene resin film is especially preferable, and the polyethylene resin film is most preferable.

These porous films can be obtained by, for example, a method described in Japanese Unexamined Patent Publication No. H9-216964, Japanese Unexamined Patent Publication No. 2002-338721, etc.; alternatively, it is also possible to use a commercialized product (e.g. "Hipore" of Asahi Kasei Corporation, "Upore" and "Upilex" of Ube Industries, Ltd., "Setera" of Tonen-Tapyrus.Co., Ltd., "Excepore" of Nitto Denko Corporation, "Hilet" of Mitsui Chemical Inc., etc.

An average pore diameter of the porous film is, in view of low film resistance of thus-obtained anion-exchange membrane and high mechanical strength, commonly 0.005 to 5.0 $\mu$m, more preferably 0.01 to 1.0 $\mu$m and most preferably 0.015 to 0.4 $\mu$m. Also, porosity of the polyolefin-based porous membrane is, for similar reasons with the above average pore diameter, commonly 20 to 95%, more preferably 30 to 80% and most preferably 30 to 50%.

Further, film thickness of the porous film is generally selected from the range of 5 to 200 $\mu$m; is preferably 5 to 60 $\mu$m for obtaining membrane with lower film resistance; and further, is most preferably 7 to 30 $\mu$m in view of balanced low methanol permeability and necessary mechanical strength.

Note that the average pore diameter of the porous film in the present invention is a value measured by half dry method in accordance with ASTM-F316-86. Also, the porosity of the porous membrane is a value calculated in the following formula by respectively substituting measurements of a volume (V $cm^3$) and mass (U g) of the porous membrane as well as a density X ($g \cdot cm^{-3}$) of a material of the porous membrane therein:

$$\text{Porosity} = [(V - U/X)/V] \times 100[\%]$$

The anion-exchange resin used in the present invention has a polymerizable unit, having a group containing an anion-exchange group shown in the above formular (1) in its main chain or side chain, as a main polymerizable unit, and is cross-linked. As a result of this cross-link, mechanical strength of the resin is improved, and the resin can securely be filled and held in the void portion of the porous film. Also, it contributes to reduction effect in permeability of the liquid fuel such as methanol when the resin is used as the separation membrane for a direct liquid fuel type fuel cell. The cross-link of the anion-exchange resin is commonly performed by using a crosslinkable polymerizable monomer having two or more polymerizable groups for producing the resin and polymerizing the same.

In the above anion-exchange resin, a content rate of the main polymerizable unit, i.e. the polymerizable unit having a group containing an anion-exchange group shown in the above formular (1) in its main chain or side chain, is

normally 50 mass % or more, and preferably 65 mass % or more in view of improved ion exchange capacity of the resin. Also, when a content rate of a unit based on the crosslinkable polymerizable monomer is too high, a content rate of the group containing an anion-exchange group shown in the above formular (1) included in the main polymerizable unit is lowered, causing decreased ion exchange capacity. Reversely, when it is too low, the anion-exchange resin is not stably held in the void portion of the base material. Therefore the content rate of the unit is preferably 0.1 to 15 mass %, more preferably 0.5 to 5 mass %.

Note that the above anion-exchange resin may include other units within the range not to greatly undermine the present effects, specifically, in the range of 49.9 mass % or less, preferably in the range of 34.5 mass % or less if the resin has the polymerizable unit, having the group containing an anion-exchange group shown in the above formular (1) in its main chain or side chain, for its main polymerizable unit, and is cross-linked based on a crosslinkable polymerizable monomer, etc. These other units are introduced through the use of other polymerizable monomers, which are copolymerizable with a polymerizable monomer used for introducing the polymerizable unit having the group containing an anion-exchange group shown in the above formular (1) in its main chain or side chain, and with the crosslinkable polymerizable monomer, respectively. However, even when thus introducing other units, it is desirable to keep the anion-exchange resin to be hydrocarbon-based.

The definition that the anion-exchange resin is hydrocarbon-based in this context is, as mentioned above, that a polymer does not substantially contain carbon-fluorine bond, and that most bonds in the main chain and side chain constituting the polymer (except for a part of quaternary ammonium base in the group containing an anion-exchange group shown in the above formular (1)) are constituted by carbon-carbon bond. In this case, a small amount of other atoms such as oxygen, nitrogen, silicon, sulfur, boron and phosphorus may be included through an ether bond, ester bond, amido bond, siloxane bond, etc., between bonds for constituting the main chain and side chain of the anion-exchange resin. Also, all of the atoms bonded to the above main chain and side chain may not be hydrogen atoms, and with a very small amount, some may be substituted by other atoms such as chlorine, bromine and iodine, or a substituent containing other atoms. The amount of these atoms other than carbon and hydrogen is preferably 10 mol% or less, more preferably 5 mol% or less, in all atoms constituting the resin (except for atoms within a part of quaternary ammonium base in the group containing an anion-exchange group shown in the above formular (1)).

As far as each of the above-explained requirements is satisfied, the anion-exchange membrane used in the present invention may be produced by any method, and is normally produced by the following method. Namely, the method includes the steps of contacting a polymerizable composition, comprising a halogenated hydrocarbon group-containing styrene shown in the following formula (2), a crosslinkable polymerizable monomer, an acid trapping agent and an effective amount of a polymerization initiator, with a porous film; filling the polymerizable composition into void portion of the porous film, followed by polymerization; introducing a quaternary ammonium group into the above halogenated hydrocarbon group; and ion-exchanging the counterion of the quaternary ammonium group into a hydroxide ion.

[Chemical Formula4]

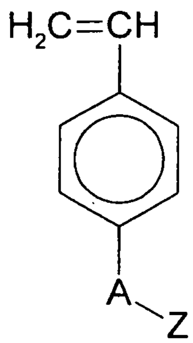

(2)

Note that "A" is same as above, and "Z" indicates a halogen atom such as chlorine, bromine and iodine, preferably bromine.

In such a production method, bromoethyl styrene, bromopropyl styrene, bromobutyl styrene, bromopentyl styrene and bromohexyl styrene may specifically be mentioned for a styrene containing a halogenated hydrocarbon group (A-Z) shown in the above formular (2). Among these, the bromopropyl styrene, bromobutyl styrene and bromopentyl styrene are especially effective, and the bromo butyl styrene is most preferable to use because of its ease of obtaining.

Also, as a crosslinkable polymerizable monomer, although not particularlly limited, for example, a divinyl compound, including divinylbenzenes, divinyl sulfone, butadiene, chloroprene, divinyl biphenyl, trivinylbenzenes, divinyl naphthalene, diallylamine and divinyl pyridines, is used.

For the polymerizable composition comprising the halogenated hydrocarbon group-containing styrene shown in the above formular (2) and the crosslinkable polymerizable monomer, if needed, other polymerizable monomer, copolymerizable with these polymerizable monomers, may also be added. These other monomers include, for example, styrene, acrylonitrile, methyl styrene, acrolein, methyl vinyl ketone, vinyl biphenyl, etc. Also, the above polymerizable composition may be added with plasticizers. For these plasticizers, dibutyl phthalate, dioctyl phthalate, dimethyl isophthalate, dibutyl adipate, triethyl citrate, acetyl tributyl citrate, dibutyl sebacate, etc. may be used.

An anion-exchange membrane, produced by using the polymerizable composition, comprising the halogenated hydrocarbon group-containing styrene shown in the formular (2) and the crosslinkable polymerizable monomer, for polymerization without any modification, is inferior in denseness of the membrane as mentioned above. Then, when using this as a separation membrane for a direct liquid fuel type fuel cell, problems occur, such that permeability of the liquid fuel cannot be reduced as expected and that fuel cell output is not sufficiently improved.

In contrast, when the above polymerizable composition is added with an acid trapping agent, thus-obtained anion-exchange membrane is, to the extent of not greatly degrading film resistance, well improved in denseness of the membrane, and shows an excellent balance beween the above-mentioned methanol impermeability and the film resistance.

The cause that thus-added acid trapping agent can improve denseness of the membrane is not fully understood, it may be considered that a part of the above halogenated long-chain hydrocarbon groups is degraded due to heat of polymerization and generated radicals at polymerization in the polymerizable monomer having a halogenated long-chain hydrocarbon group (the degradation may be more drastic than the degradation of chloromethyl group in chloromethylstyrene). It is predicted that thus-generated by-products including halogen gas and halogenated hydrogen gas, such as bromine gas and hydrogen bromide gas, may foam in the resin generated by the polymerization to cause to greatly reduce the denseness of thus-generated ion-exchange resin. On the other hand, when adding the acid trapping agent to the above polymerizable composition as mentioned above, it is expected that even when the bromine gas and hydrogen bromide gas are generated as by-products at polymerization of the halogenated hydrocarbon group-containing styrene, these by-products can immediately be trapped by the above acid trapping agent without causing negative effects such as foaming to reduce denseness of the membrane.

Such an acid trapping agent is not particularlly limited if the agent has properties to chemically or physically absorb halogen gas, such as bromine gas, and halogenated hydrogen gas, such as hydrogen bromide gas, and if the agent is inactive to the halogenoalkyl group in the polymerizable composition. It is preferable to use a liquid compound, compatible to other components constituting said polymerizable composition, specifically main component, i.e. halogenated hydrocarbon group-containing styrene, and capable of maintining liquid form even after absorbing halogen, etc. Alternatively, it is preferable to use a solid compound as the acid trapping agent if the compound can be solubilized by reacting with an acid in the polymerizable composition. The acid trapping agent compatible to the polymerizable composition can be uniformly dispersed in the polymerizable composition, so that it is possible to securely absorb the halogen. Also, when it is liquid by itself even after absorbing the halogen, etc., the acid trapping agent absorbing the halogen, etc. can be removed from the polymerized anion-exchange membrane by simple washing.

For the acid trapping agent, for example, a compound having an epoxy group, secondary amine compound, primary amine compound, etc. can be used, and it is preferable to use the compound having an epoxy group.

As the compound having an epoxy group (epoxy compound), any known compound having one or more of epoxy groups in a molecule can be used without any limitation. Specifically, there may be mentioned sorbitol polyglycidyl ether, sorbitan polyglycidyl ether, polyglycerol polyglycidyl ether, pentaerythritol polyglycidyl ether, diglycerol polyglycidyl ether, triglycidyl-tris (2-hydroxyethyl) isocyanurate, glycerol polyglycidyl ether, trimethylolpropane polyglycidyl ether, resorcin diglycidyl ether, neopentyl glycol diglycidyl ether, 1,6-hexanediol diglycidyl ether, polyethylene glycol diglycidyl ether, polypropylene glycol diglycidyl ether, polytetramethylene glycol diglycidyl ether, allyl glycidyl ether, 2-ethyl hexyl glycidyl ether, phenyl glycidyl ether, phenol (ethylene oxide) glycidyl ether, p-t-butyl phenyl glycidyl ether, lauryl alcohol (ethylene oxide)glycidyl ether, adipic acid diglycidyl ester, o-phthalic acid glycidyl ester, hydroquinone diglycidyl ether, bisphenol A diglycidyl ether, bisphenol S diglycidyl ether, terephthalic acid diglycidyl ester, glycidyl phthalimide, dibromo phenyl glycidyl ether, dibromo neopentyl glycol diglycidyl ether; epoxidized vegetable oil such as epoxidized soybean oil and epoxidized linseed oil or derivatives thereof; terpene oxide, styrene oxide or derivatives thereof; epoxidized $\alpha$-olefin, epoxidized polymer etc. Among these, a glycidyl-ether compound of a saturated polyalcohol such as ethylene glycol diglycidyl ether is especially preferable. Such an epoxy compound can be obtained by a method disclosed in Japanese Unexamined Patent Publication H11-158486, for example, and it is also available as a commercialized product (e.g. ADEKA's "ADK CIZER", KAO's "KAPOX", Kyoeisha Chemical's "EPOLIGHT", Daicel Chemical Industries' "CYCLOMER" and "DAIMAC" and Nagase ChemteX Corporation's "DENACOL").

Further, for the polymerization initiator added to the above polymerizable composition, conventionally known initiators can be used without any particular limitation. To more prevent the above-mentioned reduction in denseness

of the membrane at the polymerization, polymerization temperature is preferably as low as 80°C or less, more preferably 75°C or less. For this purpose, it is more preferable to use the one with 10-hour half-life temperature of 10 to 100°C, more preferably 20 to 80°C, for the above polymerization initiator. These polymerization initiators may include octanoyl peroxide, lauroyl peroxide, t-butylperoxy-2-ethylhexanoate, benzoyl peroxide, t-butylperoxy isobutylate, t-butylperoxy laurate, t-hexylperoxy benzoate and di-t-butyl peroxide.

In the present invention, a ratio of each component constituting the polymerizable composition is not particularlly limited and can be selected from a wide range. When the ratio of the halogenated hydrocarbon group-containing styrene is low, the effects of the present invention may not be fully exerted. Also when amounts of the crosslinkable polymerizable monomer and polymerization initiator are not enough, the polymerization may not sufficiently proceed, and the polymer, i.e. the directly-bonded anion-exchange resin, cannot be stably filled into the base material. Therefore, the following ratios are preferable.

Namely, in a total amount of polymerizable monomers of the polymerizable composition, the halogenated hydrocarbon group-containing styrene is preferably 85 to 99.9 mass%, more preferably 95 to 99.5 mass%, and the crosslinkable polymerizable monomer is preferably 0.1 to 15 mass%, more preferably 0.5 to 5 mass%. When including other polymerizable monomers copolymerizable with these polymerizable monomers, the ratio is preferably 49.9 mass% or less, more preferably 34.5 mass% or less, in the polymerizable composition.

Also, a ratio of the acid trapping agent in the above polymerizable composition is preferably 1 to 12 mass parts, more preferably 3 to 8 mass parts, per 100 mass parts of the halogenated hydrocarbon group-containing styrene. When the ratio of the acid trapping agent is more than 1 mass part, the denseness of the membrane may sufficiently be high, and methanol impermeability as a separation membrane for a direct liquid fuel type fuel cell may sufficiently be high. On the other hand, when the ratio of the acid trapping agent is smaller than 12 mass parts, excessive acid trapping agent may rarely be bled out from the anion-exchange resin, so that it can be restrained to insufficiently fill the anion-exchange resin into the porous membrane due to bleed-out and to greatly reduce the methanol impermeability.

Also, a ratio of the polymerization initiator is not limited if the amout is sufficient for proceeding polymerization reaction of the polymerizable composition, and is generally preferably 1 to 10 mass parts, more preferably 2 to 5 mass parts, per 100 mass parts of the total polymerizable monomers used.

A method to fill the above polymerizable composition into the void portion of the porous film which is a base material is not particularlly limited. For example, there may be illustrated a method to coat or spray the polymerizable composition on the porous film, or a method to dip the porous film into the polymerizable composition.

For a method for polymerizing the polymerizable composition filled in the void portion of the porous film as above, a method, in which the membrane is sandwiched between films such as polyester films and subject to temperature-rising from room temperature under pressure, is generally preferable. The polymerization conditions are varied depending on the kind of the involved polymerization initiator, constitution of the polymerizable composition, etc., but are not particularlly limited and may be properly selected. To prevent the above-mentioned reduction of the denseness of the membrane at polymerization, polymerization temperature is preferably as low as 80°C or less, more preferably 40 to 75°C or less.

In the membrane-shaped material obtained after the polymerization, a quaternary ammonium group is introduced into the halogenated hydrocarbon group in the resin originating from the halogenated hydrocarbon group-containing styrene. The quaternarization method may be any conventional method, and more specifically, there may be mentioned a method in which the membrane-shaped material obtained after the polymerization is impregnated with a soluction containing raw materials of the quaternary ammonium group, i.e. a tertiary amine defined as $NR^1R^2R^3$ {where $R^1$, $R^2$and $R^3$, respectively bonding to the nitrogen atom, are same as $R^1$, $R^2$and $R^3$ in the above formular (1), respectively}, preferably a tertiary amine such as trimethyl amine, triethyl amine and dimethylaminoethanol, for 10 hours or more. Note that it is preferable to use a polar solvent, such as acetonitrile, as a solvent of the solution and to impregnate the membrane at 60 to 90°C under condition to make the number of moles of the tertiary amine more than twice as large as molar quantity of the halogenoalkyl groups in the membrane to be reacted therewith since the tertiary amine to be its raw material is low in reactivity when introducing a quaternary ammonium group containing an alkyl group having 4 to 8 carbon atoms.

Thus-obtained anion-exchange membrane normally has a quaternary ammonium group having a halogeno ion as its counterion, but it is preferable to ion-exchange the counterion of the quaternary ammonium group into a hydroxide ion because it is easy to obtain high fuel cell output when using the anion-exchange membrane for a fuel cell membrane conducting hydroxide ion.

A method for ion exchange of the counterion of the quaternary ammonium group into hydroxide ion may be any conventional method. Normally, the ion exchange is performed by dipping the above anion-exchange membrane into aqueous alkali hydroxide solution such as aqueous sodium hydroxide solution and aqueous potassium hydroxide solution. Concentration of the aqueous alkali hydroxide solution is not particularlly limited and is generally 0.1 to 2 $mol \cdot L^{-1}$ or so. Also, dipping temperature is 5 to 60°C, and dipping time is 0.5 to 24 hours or so. Immediately after the ion exchange to a hydroxide ion type after quaternarization, the counterions of the quaternary ammonium group are mainly hydroxide

ions, but those may gradually be exchanged into a carbonate ion and bicarbonate ion by carbon dioxide in the air. However, when starting operation of the fuel cell, the carbonate ion and bicarbonate ion are ion-exchanged to a hydroxide ion, so that there is no practical issue except for initial stage of the operation.

The above production method results in a separation membrane for a direct liquid fuel type fuel cell of the present invention, showing excellent heat resistance, which is an anion-exchange membrane having a porous film as a base material whose void portion is filled with cross-linked anion-exchange resin, wherein: the cross-linked anion-exchange resin has a polymerizable unit, having a group containing an anion-exchange group shown in the above formular (1) in a main chain or a side chain, as its main polymerizable unit. Namely, in the anion-exchange membrane obtained from raw material, i.e. the polymerizable composition comprising the halogenated hydrocarbon group-containing styrene shown in the above-mentioned formular (2), the crosslinkable polymerizable monomer, and the effective amount of the polymerization initiator as well as the acid trapping agent, uniformity and denseness of the membrane are improved, and methanol impermeability and film resistance are highly balanced.

Specifically, a uniformity index of the anion-exchange membrane defined as below is preferably 30% or less, further preferably 20% or less and especially preferably within the range of 10 to 1%. The lower uniformity index means that the anion-exchange resin is uniformly filled in the porous film, and the membrane is free from curling and getting wrinkles even when being moistened by water.

The uniformity index is determined in the following procedure.

[1] The anion-exchange membrane is absolutely dried. The membrane is dried until moisture is not substantially included. The drying conditions of the membrane are under reduced pressure of 10 Pa or less, at 30 to 70°C and for 6 to 24 hours or so.
[2] A square sample of 5 cm×5 cm is cut out from a central region of the absolutely dried membrane, and its weight (W0) is measured. The membrane is normally square-shaped or rectangular-shaped, and the central region is an intersection of diagonal lines.
[3] The square sample is further divided into small pieces of 5 mm×5 mm;
[4] Each weight of the small pieces is measured to determine a maximum weight and a minimum weight to calculate a difference (W1) therebetween;
[5] A uniformity index of the membrane is determined as a ratio (percentage) of the difference (W1) between the maximum weight and the minimum weight per an average weight (W0/100) of small pieces, [W1/(W0/100)]×100.

Also, a fuel cell membrane using the above anion-exchange membrane preferably shows that a film resistance measured by AC impedance method in wet condition at 40°C is 0.005 to 1.2 $\Omega \cdot cm^2$ and methanol permeability at 25°C is 30 to 800 $g \cdot m^{-2} \cdot hr^{-1}$. In this case, it is preferable that polymerization temperature is as low as 80°C or less as mentioned above. Also, for the porous film, it is preferable to use a film having an average pore diameter of 0.001 to 1.0 μm, porosity of 30 to 70% and film thickness of 3 to 200 μm, further preferably a film having an average pore diameter of 0.015 to 0.2 μm, porosity of 30 to 50% and film thickness of 5 to 60 μm. Also, for the polymerizable composition, it is more effective to use the one in which each component is within said preferable ratio, for obtaining the highly balanced methanol impermeability and film resistance as mentioned above.

As a result of selecting these preferable conditions, it is possible to produce an anion-exchange membrane showing that a film resistance measured by AC impedance method in wet condition at 40°C is more preferably 0.005 to 0.5 $\Omega \cdot cm^2$, most preferably 0.01 to 0.2 $\Omega \cdot cm^2$. On the other hand, methanol permeability at 25°C can be more preferably as low as within the range of 200 to 750 $g \cdot m^{-2} \cdot hr^{-1}$.

Note that it is common in the anion-exchange membrane obtained by the above production method, etc., used in the present invention that anion exchange capacity is 0.2 to 3 $mmol \cdot g^{-1}$, preferably 0.5 to 2.5 $mmol \cdot g^{-1}$. Also, moisture content at 25°C is maintained 7% or more, preferably 10 to 90% or so, so that it is commonly difficult to reduce conductivity of hydroxide ion due to drying.

Thus-produced anion-exchange membrane is, if needed, subject to washing, cutting, etc., and is used as a separation membrane for a direct liquid fuel type fuel cell in accordance with the known method.

As a direct liquid fuel type fuel cell for using the separation membrane of the present invention, the fuel cell having the basic structure shown in the above-mentioned FIG.1 is common, and the separation memberane can also be applied in any direct liquid fuel type fuel cells having the other known structures. As for liquid fuel, methanol is most commonly used to exert the effects of the present invention most significantly, and other fuels such as ethanol, ethylene glycol, dimethyl ether and hydrazine can exert similarly excellent effects.

EXAMPLE

Hereinafter, examples are taken to describe the present invention further in detail, but the present invention is not limited to these examples.

Note that each measurement method of various properties used for property evaluation of a fuel cell membrane in Examples and Comparative Examples, such as anion exchange capacity, moisture content, film resistance, durability of an anion-exchange group, methanol permeability and fuel cell output voltage, will be explained below.

1) Anion Exchange Capacity and Moisture Content

The anion-exchange membrane was dipped into 0.5 $mol \cdot L^{-1}$ -NaCl aqueous solution for 10 hours or more to change it into a chloride ion type, followed by changing it further into a nitrate ion type with 0.2 $mol \cdot L^{-1}$ -NaN03 aqueous solution to generate a free chloride ion. The free chloride ion was titrated with silver nitrate aqueous solution by potentiometric titrator (COMTITE-900 by Hiranuma Sangyo Co., Ltd.) (A mol). Next, the same ion exchange membrane was dipped into 0.5 $mol \cdot L^{-1}$ -NaCl aqueous solution at 25°C for 4 hours or more, and thoroughly washed by ion exchange water. Then, moisture on the surface of the membrane was wiped off with tissue paper, etc., and a weight of the moistened membrane (W g) was measured. Further, the membrane was dried at 60°C for 5 hours under reduced pressure to measure the the dried weight (D g). Based on the above measurements, ion exchange capacity and moisture content were obtained by the following formula.
$$\text{Anion exchange capacity} = A \times 1000/D\ [\text{mmol} \cdot g^{-1}\text{-dried weight}]$$

$$\text{Moisture content} = 100 \times (W-D)/D\ [\%]$$

2) Average Pore Diameter of Porous Membrane

An average pore diameter of the porous membrane was measured by half dry method in accordance with ASTM-F316-86.

3) Porosity of Porous Membrane

A volume (V $cm^3$ ) and mass (U g) of the porous membrane were measured, and porosity of the porous membrane was calculated in the following formula on the basis of 0.9 ($g \cdot cm^{-3}$ ) as a resin density of polyethylene, i.e. material of the porous membrane.
$$\text{Porosity} = [(V-U/0.9)/V] \times 100[\%]$$

4) Uniformity Index of Membrane

The anion-exchange membrane was dried under reduced pressure of 2 Pa at 50°C for 12 hours. A square sample of 5 cm×5 cm was cut out from a central region of the absolutely dried membrane, and its weight (W0) was measured. Then, the square sample was further divided into small pieces of 5 mm×5 mm. Each weight of the small pieces was measured to determine a maximum weight and a minimum weight to calculate a difference (W1) therebetween. A uniformity index of the membrane was determined as a ratio (percentage) of the difference (W1) between the maximum weight and the minimum weight per an average weight (W0/100) of small pieces, [W1/(W0/100)]x100.

5) Film Resistance

The anion-exchange membrane prepared by the method described in the following Examples or Comparative Examples was left in the air, in a dry condition for 24 hours or more, and then, moistened in ion exchange water at 40°C, followed by cutting to prepare a reed-shaped sample of the anion-exchange membrane with a width of about 6 cm and a length of 2.0 cm. Then, an insulating substrate was prepared by arranging 5 platinum wires with line width of 0.3 mm, with an interval of 0.5 cm in a transverse direction (same direction as a transverse direction of the anion-exchange membrane), in a linear fashion parallel to each other and parallel to a longitudinal direction (same direction as a longitudinal

direction of the anion-exchange membrane). A sample for measurements was prepared by pressing said platinum wire of the insulating substrate against said anion-exchange membrane.

For the sample for the above measurements, each AC impedance between the first and second platinum wires (platinum wire distance = 0.5 cm), between the first and third platinum wires (platinum wire distance = 1.0 cm), between the first and forth platinum wires (platinum wire distance = 1.5 cm) and between the first and fifth platinum wires (platinum wire distance = 2.0 cm) was measured. Each measurement was plotted to have an x axis as distance between platinum wires and a y axis as AC impedance, and a slope between resistance poles (S) was obtained from thus-obtained graph. Also, a film resistance (R) was obtained based on the following formula. In this case, the AC impedance was measured under the condition.such that 1 kHz of AC was applied between the platinum wires while the sample for measurements was kept in a thermo-hygrostat at 40°C at 90%RH to make droplet of ion exchange water generated on the surface of the anion-exchange membrane. Also, film thickness (L) was measured by moistening the anion-exchange membrane with ion exchange water.

$R=2.0\times L^2\times S$

R: film resistance [$\Omega\cdot cm^2$]

L: film thickness [cm]

S: slope between resistance poles [$\Omega\cdot cm^{-1}$]

Note that the distance between platinum wires and AC impedance bore a linear relation (proportional relation) in the above graph, and that a resistance by contacting between the platinum wire and anion-exchange membrane (contact resistance) in the measured sample was evaluated as γ-intercept, so that it was possible to calculate the slope between resistance poles (S), meaning a specific resistance of the membrane, from the slope of the graph. In the measurements, film resistance (R) was obtained based on the slope between resistance poles (S), resulting in eliminating an influence of the above contact resistance.

6) Durability of Anion-Exchange Group

A square sample of a 5 cm×5 cm was cut out from the anion-exchange membrane in which its counterion was changed into a hydroxide ion type, placed in a polytetrafluoroethylene container and kept in an oven at 90°C for 500 hours, followed by measurements of anion exchange capacity. A retention rate of the anion exchange capacity was obtained as a rate of anion exchange capacity of the membrane after heating with respect to anion exchange capacity of the membrane before heating, which was evaluated as durability of the anion-exchange group.

7) Methanol Permeability

Methanol aqueous solution and argon gas were respectively communicated to two flow passages mutually adjacent via the anion-exchange membrane, and methanol permeability was obtained from methanol concentration included in the argon gas at an outlet port of the flow passage. For the above measurement of concentration, a cell for measuring methanol permeability which has the structure shown in FIG.2 and FIG.3 was used.

The cell for measuring has, as shown in FIG.2, a structure that a separation membrane 13 is sandwiched in between a pair of separators 9 respectively via gaskets 12. As shown in FIG.3, each separator 9 is a square plate-like body with a side of 10 cm. A dented portion with a square cross section is provided in the back of each separator, and the dented portion is 1 mm in depth and 2.3 mm on a side of the square. By using this separator, a cuboid-shaped flow passage is designed to be formed by a space divided by the dented portion and the separation membrane when assembling the cell. Namely, a gas passage 10 can be formed by a space divided by the dented portion of one of the separators and the separation membrane, and a liquid flow passage 11 can be formed by a space divided by the dented portion of the other separator and the separation membrane. Also, as shown in FIG.3, pores having a circular cross section with a diameter of 1 mm are provided at diagonally opposite corners of the square in both ends of the respective flow passages, specifically both ends of the above dented portion in each separator. Further, as shown in FIG.3, in the gas passage 10, one of the pores is an inlet port for flowing gas 10a, and the other pore is an outlet port for flowing gas 10b. Similarly, two pores at both ends of the liquid flow passage 11 work respectively as an inlet port for flowing liquid and an outlet port for flowing liquid in the other separator having the same structure as shown in FIG.3.

Further, the gasket 12 is made of silicon rubber, and placed to avoid gas and liquid from leaking from the flow passages without blocking said dented portion when assembling the cell.

Using the above cell for measuring, measurements were done by the following procedure. Namely, a separation membrane was first cut into a square sample with a side of 4 cm by using a cutter, and the separation membrane was sandwiched by separators via a gasket, so that a cell for measuring was assembled. An area of contacting liquid in the

anion-exchange membrane in this cell (= an area of contacting gas) was 5 $cm^2$.

Then, using a tube pump, methanol aqueous solution at a concentration of 30 mass% was supplied from an inlet port for flowing liquid to flow it in the liquid flow passage 11 at a rate of 2 $ml \cdot min^{-1}$, and G3-grade argon gas at a pressure of 0.1 MPa was supplied from an inlet port for flowing gas 10a to flow in the gas passage 10 at a rate of 300 $ml \cdot min^{-1}$. After 1 hour from starting to flow the methanol aqueous solution and argon gas, argon gas discharged from an outlet port for flowing gas 10b was introduced to a gas chromatography equipment to analyze, so that an amount of permeated methanol was determined.

At this time, the volume of gas introduced to the gas chromatography equipment was obtained by using 5-ml measuring tubes, so that it was possible to analyze a specific amount of gas in each measurement. Also, all measurements were done at 25°C under atmospheric pressure.

When the flow amount of argon gas was A $ml \cdot min^{-1}$, the methanol amount in 5 ml of argon gas to be analyzed was equal to an amount of methanol permeating the membrane within (5/A) min. Therefore, when the detected amount was X g, and the area of contacting liquid (an area of contacting gas) in the anion-exchange membrane in the cell was B $cm^2$, a methanol permeability [$g \cdot m^{-2} \cdot hr$] was calculated from the the following formula.

$$\text{Methanol permeability} = X / [(5/A/60) \times B/10000]$$

8) Fuel Cell Output Voltage

First, chloromethyl styrene-styrene copolymer having a molecular weight of 30,000 and styrene content of 60 weight % was quaternarized by trimethyl amine. Then, tetrahydrofuran solution (resin concentration of 5 weight %) of anion-exchange resin after ion-exchange into hydroxide ion by suspending in large excess of 0.5 $mol \cdot L^{-1}$ -NaOH aqueous solution was mixed with carbon black supporting 50 weight % of platinum-ruthenium alloy catalyst (ruthenium 50 mol%). The mixture was coated on water-repellent carbon paper treated by polytetrafluoroethylene having a thickness of 100 $\mu m$ and porosity of 80%, so as to have a catalyst concentration of 2 $mg \cdot cm^{-2}$. The coated mixture was dried under reduced pressure at 80°C for 4 hours, and then, a fuel chamber side diffusion electrode and an oxidizing agent chamber side gas diffusion electrode were respectively produced.

Next, the above fuel chamber side diffusion electrode and oxidizing agent chamber side gas diffusion electrode were respectively set in both surfaces of the fuel cell membrane to be measured, and after hot press at 100°C under a pressure of 5 MPa for 100 seconds, it was left at room temperature for 2 minutes. This was installed in a fuel cell having the structure shown in FIG.1. The temperature of the fuel cell was set at 50°C, 10 weight % of methanol aqueous solution was supplied into the fuel chamber side, and oxygen at atmospheric pressure was supplied into the oxidizing agent chamber side at 200 $ml\text{-}min^{-1}$ to perform a power generation test, in which terminal voltage of the cell was measured at current density of 0 $A \cdot cm^{-2}$ and 0.1 $A \cdot cm^{-2}$.

(Examples 1 to 7)

According to the composition shown in Table 1, respective kinds of monomers, etc. were mixed to obtain a polymerizable composition. 400 g of the obtained polymerizable composition was placed in a 500-ml glass container, and porous film shown in Table 1 was cut into a sample of 20 cmx20 cm to dip into the above polymerizable composition in the container.

Then, the porous film was taken out of the polymerizable composition, and both sides of the porous film were covered with 100-$\mu m$ polyester films as separating material, followed by heating to polymerize under a pressure by 0.3 MPa nitrogen at the temperature shown in Table 1 for 5 hours.

The obtained membrane-shaped material was dipped into aqueous solution containing 6 weight % of trimethyl amine and 25 weight % of acetone at room temperature for 16 hours, and then suspended in large excess of 0.5 $mol \cdot L^{-1}$ -NaOH aqueous solution for ion exchange of its counterion from bromide ion to hydroxide ion, followed by washing ion exchange water to obtain a fuel cell membrane.

For the obtained fuel cell membrane, anion exchange capacity, moisture content, uniformity index of the membrane, film resistance, durability of the anion-exchange group, methanol permeability, fuel cell output voltage were respectively measured. The results are shown in Table 2, respectively.

(Comparative Example 1)

Except for using chloromethylstyrene instead of bromo butyl styrene, the same procedures were performed as

in Example 1 to obtain a fuel cell membrane.

For the obtained fuel cell membrane, anion exchange capacity, moisture content, uniformity index of the membrane, film resistance, durability of the anion-exchange group, methanol permeability, fuel cell output voltage were respectively measured. The results are shown in Table 2.

(Comparative Example 2)

Except for not adding epoxy compound (ethylene glycol diglycidyl ether, Kyoeisha Chemical's "EPOLIGHT 40E"), the same procedures were performed as in Example 1 to obtain a fuel cell membrane.

For the obtained fuel cell membrane, anion exchange capacity, moisture content, uniformity index of the membrane, film resistance, durability of the anion-exchange group and methanol permeability were measured. However, it was impossible to measure fuel cell output voltage since the anion-exchange membrane was uneven and electrodes were hardly bonded thereto. The results are shown in Table 2.

[Table 1]

Table 1

| Example | Porous Film | Polymerization Temp. /°C | Composition (mass by parts) | | | | | | |
|---|---|---|---|---|---|---|---|---|---|
| | | | BBS1) | BPS2) | CMS3) | DVB4) | EP5) | PO6) | DBPO7) |
| 1 | A | 70 | 99.5 | 0 | 0 | 0.5 | 5 | 5 | 0 |
| 2 | A | 70 | 98 | 0 | 0 | 0 2 | 5 | 0 | 5 |
| 3 | A | 70 | 96 | 0 | 0 | 4 | 5 | 5 | 0 |
| 4 | B | 70 | 99 | 0 | 0 | 1 | 5 | 5 | 0 |
| 5 | B | 70 | 98 | 0 | 0 | 2 | 5 | 5 | 0 |
| 6 | A | 45 | 98 | 0 | 0 | 2 | 5 | 5 | 0 |
| 7 | A | 45 | 0 | 98 | 0 | 2 | 5 | 5 | 0 |
| Comp. 1* | A | 45 | 0 | 0 | 98 | 2 | 5 | 5 | 0 |
| Comp. 2* | A | 70 | 99.5 | 0 | 0 | 0.5 | 0 | 5 | 0 |

Porous Film A) polyethylene porous film having an average pore diameter of 0.03 μm, a thickness of 25 μm, porosity of 36%
Porous Film B) polyethylene porous film having an average pore diameter of 0.03 μm, a thickness of 12 μm, porosity of 38%
1) BBS: 4-bromo butyl styrene
2) BPS: 4-bromopropyl styrene
3) CMS: 4-chloromethylstyrene
4) DVB: divinylbenzene
5) EP: epoxy compound (ethylene glycol diglycidyl ether) Kyoeisha Chemical's "EPOLIGHT 40E"
6) PO: t-butylperoxy ethylhexanoate
7) DBPO: di-t-butyl peroxide
* Comp.1 & Comp 2: Comparative Examples 1 & 2

[Table 2]

Table 2

| Example | Anion Exchange Capacity [mmol/g-dried weight] | Moisture Content [%] | Film Resistance [Ω·$cm^2$] | Film Thickness [μm] | Uniformity Index of Membrane | Durability of Anion Exchange Capacity [%] | Methanol Permeability [g/($m^2$·hr)] | Fuel Cell Output Voltage [V] | |
|---|---|---|---|---|---|---|---|---|---|
| | | | | | | | | 0 A/$cm^2$ | 0.1 A/$cm^2$ |
| 1 | 1.6 | 30 | 0.02 | 35 | 7 | 99 | 430 | 0.72 | 0.27 |
| 2 | 1.5 | 17 | 0.07 | 27 | 5 | 99 | 330 | 0.80 | 0.28 |
| 3 | 1.4 | 13 | 0.14 | 25 | 5 | 98 | 260 | 0.81 | 0.18 |
| 4 | 1.8 | 17 | 0.01 | 15 | 8 | 98 | 720 | 0.68 | 0.33 |
| 5 | 1.6 | 18 | 0.04 | 13 | 9 | 99 | 440 | 0.75 | 0.28. |
| 6 | 1.5 | 18 | 0.08 | 26 | 5 | 99 | 320 | 0.79 | 0.29 |
| 7 | 1.6 | 19 | 0.08 | 28 | 5 | 98 | 350 | 0.79 | 0.22 |
| Comp.1* | 1.7 | 19 | 0.06 | 26 | 7 | 89 | 380 | 0.78 | 0.20 |
| Comp.2* | 0.4 | 2 | 0.73 | 25 | 32 | 99 | 1850 | unmeasurable due to peeling of electrodes | |

* Comp.1 & Comp 2: Comparative Examples 1 & 2

## Claims

1. A separation membrane for a direct liquid fuel type fuel cell, which is an anion-exchange membrane having a porous film as a base material whose void portion is filled with a cross-linked anion-exchange resin, wherein:

   said cross-linked anion-exchange resin has a main chain or a side chain bonded to a group containing an anion-exchange group shown in the following formula (1):

   [Chemical Formula 1]

   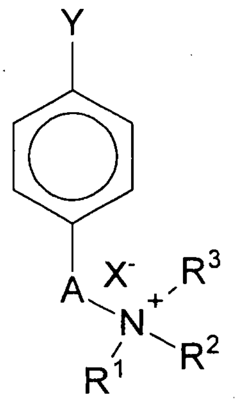

   (1)

   where "A" represents a linear, cyclic or branched alkylene group having 2 to 10 carbon atoms, or an alkoxy methylene group having 5 to 7 carbon atoms;
   each of $R^1$, $R^2$ and $R^3$ represents a linear, cyclic or branched alkyl group having 1 to 8 carbon atoms and any two of $R^1$, $R^2$ and $R^3$ may mutually cooperate to form an aliphatic hydrocarbon ring;
   "$X^-$" represents an anion selected from a group consisting of a hydroxide ion, carbonate ion and bicarbonate ion,
   "Y"represents a bond to said anion-exchange resin.

2. The separation membrane for a direct liquid fuel type fuel cell as set forth in claim 1, wherein said anion-exchange membrane has a uniformity index of 30% or less, the uniformity index being determined in the following procedure:

   [1] said anion-exchange membrane is absolutely dried;
   [2] a square sample of 5 cm×5 cm is cut out from a central region of the absolutely dried membrane, and its weight (W0) is measured;
   [3] the square sample is further divided into small pieces of 5 mm×5 mm;
   [4] each weight of the small pieces is measured to determine a maximum weight and a minimum weight to calculate a difference (W1) therebetween;
   [5] a uniformity index of the membrane is determined as a ratio (percentage) of the difference (W1) between the maximum weight and the minimum weight per an average weight (W0/100) of small pieces, [W1/(W0/100)] ×100.

3. The separation membrane for a direct liquid fuel type fuel cell as set forth in claim 1, wherein a film resistance measured by AC impedance method in wet condition at 40°C is 0.005 to 1.2 $\Omega \cdot cm^2$, and methanol permeability at 25°C is 30 to 800 $g \cdot m^{-2} \cdot hr^{-1}$.

4. The separation membrane for a direct liquid fuel type fuel cell as set forth in claim 1, wherein a film resistance measured by AC impedance method in wet condition at 40°C is 0.01 to 0.2 $\Omega \cdot cm^2$, and methanol permeability at 25°C is 200 to 750 $g \cdot m^{-2} \cdot hr^{-1}$.

5. A production method of a separation membrane for a direct liquid fuel type fuel cell comprising the steps of:

   contacting a polymerizable composition, comprising a halogenated hydrocarbon group-containing styrene shown in the following formula (2), a crosslinkable polymerizable monomer, an acid trapping agent and an

effective amount of a polymerization initiator, with a porous film;
filling the polymerizable composition into void portion of the porous film, followed by polymerization;
introducing a quaternary ammonium group to the above halogenated hydrocarbon group; and
ion-exchanging a counterion of the quaternary ammonium group into a hydroxide ion.

[Chemical Formula 2]

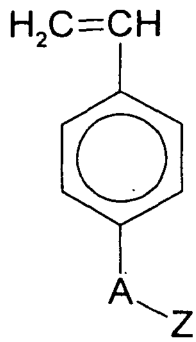

(2)

where "A" represents a linear, cyclic or branched alkylene group having 2 to 10 carbon atoms, or an alkoxy methylene group having 5 to 7 carbon atoms; and
"Z" represents a halogen atom.

**6.** The production method of a separation membrane for a direct liquid fuel type fuel cell as set forth in claim 5, wherein said acid trapping agent is a compound having an epoxy group.

**7.** The production method of a separation membrane for a direct liquid fuel type fuel cell as set forth in claim 5 or 6, wherein said polymerization is performed at 80°C or less.

FIG.1

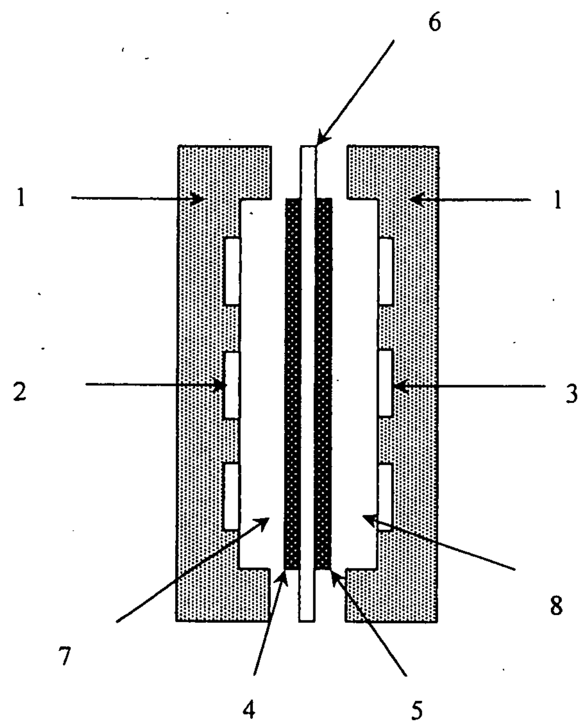

FIG.2

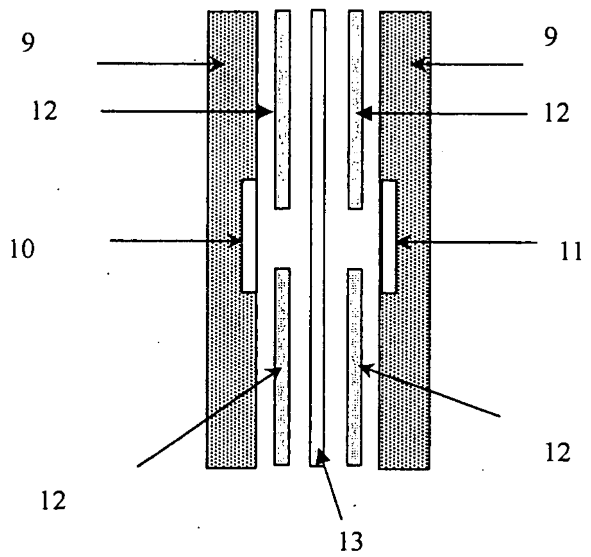

FIG.3

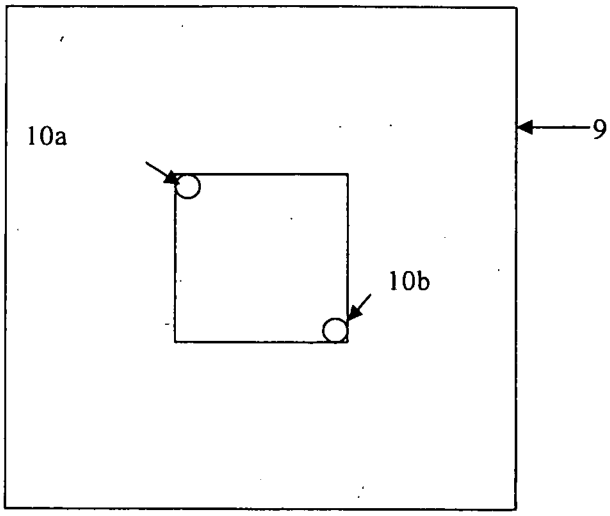

**INTERNATIONAL SEARCH REPORT**

International application No.
PCT/JP2008/073408

A. CLASSIFICATION OF SUBJECT MATTER
*H01M8/02*(2006.01)i, *C08F12/26*(2006.01)i, *C08J5/22*(2006.01)i, *H01B1/06*(2006.01)i, *H01B13/00*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, C08F12/26, C08J5/22, H01B1/06, H01B13/00, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | WO 2008/120675 A1 (Tokuyama Corp.), 09 October, 2008 (09.10.08), Full text (Family: none) | 1-7 |
| X<br>A | JP 2007-188788 A (Tokuyama Corp.), 26 July, 2007 (26.07.07), Claims 1 to 6; Par. Nos. [0025], [0046], [0047] (Family: none) | 1<br>2-6 |
| Y | JP 2000-212306 A (Mitsubishi Chemical Corp.), 02 August, 2000 (02.08.00), Claims 1 to 10; Par. Nos. [0025], [0030] to [0037], [0040], [0046] to [0049], [0055] (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 March, 2009 (25.03.09) | 07 April, 2009 (07.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/073408

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-072842 A (Tokuyama Corp.), 28 June, 2007 (28.06.07), Par. Nos. [0202] to [0204] (Family: none) | 1-7 |
| Y<br>A | JP 56-36507 A (Tokuyama Soda Co., Ltd.), 09 April, 1981 (09.04.81), Claims 1, 2; page 1, left column, line 15 to page 3, upper left column, line 14 (Family: none) | 2-7<br>1 |
| A | JP 2005-146066 A (Tokuyama Corp.), 09 June, 2005 (09.06.05), Full text (Family: none) | 1-7 |
| A | JP 2007-42617 A (Tokuyama Corp.), 15 February, 2007 (15.02.07), Full text & EP 1901379 A1 & WO 2007/004716 A1 | 1-7 |
| A | JP 2004-55185 A (Idemitsu Petrochemical Co., Ltd.), 19 February, 2004 (19.02.04), Full text & US 2004/0200636 A1 | 1-7 |
| A | JP 2002-203568 A (Mitsubishi Chemical Corp.), 19 July, 2002 (19.07.02), Full text (Family: none) | 1-7 |
| A | JP 2007-123259 A (Tokuyama Corp.), 17 May, 2007 (17.05.07), Full text & EP 1901379 A1 & WO 2007/004716 A1 | 1-7 |
| A | JP 2004-206899 A (Mitsubishi Chemical Corp.), 22 July, 2004 (22.07.04), Full text (Family: none) | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HILL135137 B
- JP H11273695 B
- JP 2000331693 A
- JP H9208625 B
- JP 2002035607 A
- WO 2007272576 A
- JP H9216964 B
- JP 2002338721 A
- JP H11158486 B